# EUROPÄISCHE PATENTSCHRIFT

(11) **EP 1 632 065 B1**
(45) Veröffentlichungstag und Bekanntmachung des Hinweises auf die Patenterteilung: **18.10.2006**
(21) Anmeldenummer: 04730543.8
(22) Anmeldetag: 30.04.2004
(51) Int. Cl.: H04L 12/58

(54) **VERFAHREN ZUM ÜBERTRAGEN VON NACHRICHTEN IN EINEM AUF MMS BASIERTEN KOMMUNIKATIONSSYSTEM**
METHOD FOR TRANSMITTING MESSAGES IN A MMS-BASED COMMUNICATIONS SYSTEM
PROCEDE POUR TRANSMETTRE DES MESSAGES DANS UN SYSTEME DE COMMUNICATION BASE SUR MMS

(30) Priorität: 06.06.2003 DE 10325889
(43) Veröffentlichungstag der Anmeldung: 08.03.2006
(73) Patentinhaber: SIEMENS AKTIENGESELLSCHAFT, 80333 München (DE)
(72) Erfinder: SCHMIDT, Andreas, 38124 Braunschweig (DE); TRAUBERG, Markus, 38159 Velchede (DE); VON TREUFELS, Klaus, 38304 Wolfenbüttel (DE)
(86) Internationale Anmeldenummer: PCT/EP2004/050659
(87) Internationale Veröffentlichungsnummer: WO 2004/109998

(56) Entgegenhaltungen:
- WO-A-01/58183
- US-A1- 2002 165 024
- US-A1- 2003 027 566

## Beschreibung

Die vorliegende Erfindung betrifft ein Verfahren zum Übertragen von Nachrichten, und insbesondere ein Verfahren zum Übertragen von Nachrichten mit Nutzdatenobjekten gemäß dem Multimedia Messaging Service (MMS) von einer Telekommunikationseinrichtung zu einer weiteren Telekommunikationseinrichtung.

Zur Übertagung von Daten, insbesondere multimedialen Datenobjekten, von einem ersten zu einem zweiten Mobiltelefon bzw. Mobilfunkgerät in einem Mobilfunkkommunikationsnetz wird von dem 3GPP (3rd Generation Partnership Project) und von der OMA (Open Mobile Alliance) der sogenannte Multimedia Messaging Service (MMS) spezifiziert. Möchte dabei ein erster Benutzer einem zweiten Benutzer ein Nutzdatenobjekt, beispielsweise in Form eines Bildes oder einer Musikdatei, zukommen lassen, so sendet er mittels seines (ersten) Mobiltelefons eine Multimedianachricht (MM) mit dem Nutzdatenobjekt an eine Vermittlungskomponente in dem Kommunikationsnetz, welche mindestens einen sogenannten MMS-Relay-Server umfasst. Eine Multimedianachricht (MM) kann auch mehrere Nutzdatenobjekte beinhalten. Der MMS-Dienstanbieter kann als spezielle Dienstleistung vor dem Aussenden einer weiteren Nachricht (im folgenden als Empfängerbenachrichtigungsnachricht bezeichnet) an das zweite Mobiltelefon des zweiten Benutzers mit der Information, dass eine Multimedianachricht (MM) mit mindestens einem Nutzdatenobjekt zum Herunterladen bereitsteht, eine individuelle Anpassung des mindestens einen zuzustellenden Nutzdatenobjekts beispielsweise an die Eigenschaften bzw. Fähigkeiten des zweiten Mobiltelefon vornehmen. Als nachteilig stellt sich bei einem derartigen Verfahren jedoch heraus, dass der Empfänger (in vorliegenden Beispiel der zweite Benutzer) einer Empfängerbenachrichtigungsnachricht bzw. einer Multimedianachricht (MM) mit mindestens einem Nutzdatenobjekt keinerlei Möglichkeit hat, zu erkennen, ob und wie die Übermittlungs nachricht (im folgenden auch als Multimedianachricht MM bezeichnet) bzw. das darin enthaltene Nutzdatenobjekt verändert worden ist, und ob das eventuell veränderte Nutzdatenobjekt verwendbar ist.

Dies wird auch in der Offenbarung in der Patentschrift US-2002/165024 deutlich, wo die Vermittlungsstelle zwar über prüft, ob der Empfänger ein bestimmtes Format unter stützt und gegebenenfalls eine Konvertierung vornimmt, ohne jedoch den Empfänger über das ursprüngliche beziehungsweise über das konvertierte Format zu informieren.

Somit ist es die Aufgabe der vorliegenden Erfindung, eine Möglichkeit der Übertragung von Nutzdatenobjekten an einen Empfänger zu schaffen, die eine verbesserte Kontrolle der zu empfangenden Nutzdatenobjekte ermöglicht.

Diese Aufgabe wird durch den Gegenstand der unabhängigen Ansprüche gelöst. Vorteilhafte Ausgestaltungen sind Gegenstand der Unteransprüche.

Dabei umfasst ein Verfahren zum Übertragen von Nachrichten, insbesondere in einem Kommunikationsnetz, folgende Schritte. Zunächst wird eine Übermittlungsnachricht mit einem oder mehreren Nutzdatenobjekten bzw. Multimedianachricht-Elementen an eine Vermittlungskomponente zur Weiterleitung an eine erste Telekommunikationseinrichtung übertragen. Diese Übertragung kann dabei von einer sendenden Telekommunikationseinrichtung, wie einem Mobilfunkgerät oder einem Mobiltelefon, erfolgen. In der Vermittlungskomponente wird in Abhängigkeit eines Satzes von Parametern eine Mehrzahl von Varianten des einen oder der mehreren Nutzdatenobjekte erstellt. Dabei wird unter Variante sowohl die ursprüngliche Form des einen oder der mehreren Nutzdatenobjekte sowie die adaptierten bzw. veränderten Versionen bezeichnet. Anschließend wird die erste Telekommunikationseinrichtung, bei der es sich auch wieder um ein Mobilfunkgerät oder ein Mobiltelefon handeln kann, über die Bereitstellung einer Mehrzahl von Varianten des einen oder der mehreren Nutzdatenobjekte zum Übertragen an die erste Telekommunikationseinrichtung informiert. Hat sich ein Empfänger, d.h. ein Benutzer der ersten Telekommunikationseinrichtung, für eine oder mehrere Varianten der Nutzdatenobjekte entschieden, wird vorteilhafterweise eine Zustellungsanforderungsnachricht bezüglich einer bestimmten Variante des einen oder der mehreren Nutzdatenobjekte von der ersten Telekommunikationseinrichtung zu der Vermittlungskomponente gesendet. Daraufhin wird von der Vermittlungskomponente eine Zustellungsnachricht mit der angeforderten Variante des einen oder der mehreren Nutzdatenobjekte an die erste Telekommunikationseinrichtung übermittelt. Durch die Information des Empfängers über die verschiedenen adaptierten und auf der Vermittlungskomponente bereitgestellten Varianten der in der Übertragungsnachricht enthaltenen Nutzdatenobjekte kann der Empfänger gezielt diejenige Variante der gewünschten Nutzdatenobjekte bzw. der gesamten Übermittlungsnachricht auswählen und herunterladen und hat somit eine verbesserte Kontrolle über seine zu empfangenden Nachrichten bzw. Nutzdatenobjekte. Durch die Information über die auf der Vermittlungskomponente bereitliegenden Nutzdatenobjekte kann der Empfänger sich auch dafür entscheiden, gar keinen Herunterladevorgang zu initiieren, wenn die Nutzdatenobjekte von ihm nicht nutzbar sind oder der Herunterladevorgang sehr kostspielig wäre. Zum einen kann also dabei vermieden werden, dass Nutzdatenobjekte (von der Vermittlungskomponente) zur ersten Telekommunikationseinrichtung heruntergeladen werden, die von der Telekommunikationseinrichtung gar nicht nutzbar sind, zum anderen können eventuell gezielt Nutzdatenobjekt heruntergeladen werden, die in der Größe minimiert sind, wobei dadurch die Herunterlade-Kosten minimiert werden können und ferner eine größere Anzahl von Nutzdatenobjekt auf der ersten Telekommunikationseinrichtung speicherbar sind. Durch das beschriebene Verfahren wird ebenso ermöglicht, daß sich der Empfänger auf Basis der Information über die auf der Vermittlungskomponente bereitliegenden Nutzdatenobjekte für das gezielte Herunterladen von Nutzdatenobjekte entscheidet, die zwar nicht von der zweiten Telekommunikationseinrichtung wiedergegeben werden können, aber möglicherweise von einem weiteren Gerät, das mit der zweiten Telekommunikationseinrichtung (entweder über Kabel, Infrarot-Schnittstelle (z.B. IrDA) oder Funk (z.B. Bluetooth) in Verbindung steht. Eine mögliche Anwendung ist das Herunterladen einer Bilddatei in gehobener Qualität durch die zweite Telekommunikationseinrichtung gefolgt vom Ausdrucken dieser Datei mittels eines externen Druckers.

Gemäß einer vorteilhaften Ausgestaltung erfolgt die Information des Empfängers bzw. der ersten Telekommunikationseinrichtung wie folgt. Es werden von der Vermittlungskomponente jeweilige Empfängerbenachrichtigungsnachrichten erzeugt, die einer bestimmten Variante des einen oder der mehreren Nutzdatenobjekte zugeordnet sind, und es werden diese jeweiligen Empfängerbenachrichtigungsnachrichten von der Vermittlungskomponente zu der ersten Telekommunikationseinrichtung übertragen.

Gemäß einer weiteren vorteilhaften Ausgestaltung umfasst der Satz von Parametern, in Abhängigkeit dessen die Mehrzahl von Varianten des einen oder der mehreren Nutzdatenobjekte erstellt wird, Parameter mit Informationen über die individuellen Eigenschaften der Telekommunikationseinrichtung. Die individuellen Eigenschaften der Telekommunikationseinrichtung können ferner Eigenschaften von auf der Telekommunikationseinrichtung vorgesehenen Anwendungen umfassen. Außerdem kann der Satz von Parametern Parameter mit Informationen über die individuellen Präferenzen des Empfängers umfassen, oder kann der Satz von Parametern Parameter mit Beschreibungsinformationen umfassen, welche die Bedeutung von in der Übermittlungsnachricht enthaltenen Nutzdatenobjekten und/oder die Beziehung von enthaltenen Nutzdatenobjekten zueinander umfassen (sogenannte Metadaten, beispielsweise nach dem MPEG-7 Standard) .

Gemäß einer vorteilhaften Ausgestaltung können die Nachrichten im Rahmen des Multimedia Messaging Service (MMS) zwischen der ersten Telekommunikationseinrichtung, der Vermittlungskomponente und der zweiten Telekommunikationseinrichtung übertragen werden. Dadurch wird eine Übertragung von Nutzdatenobjekten ermöglicht, die auch multimediale Inhalte mit großem Datenumfang, wie digitale Bilder, Video-Clips, oder umfangreiche Audio- bzw. Musikdateien umfassen können.

Gemäß einer vorteilhaften Ausgestaltung sind die erste Telekommunikationseinrichtung und eventuell weitere Telekommunikationseinrichtungen sowie die Vermittlungskomponente Teil eines Telekommunikationsnetzes. Dabei kann die oder die weiteren Telekommunikationseinrichtungen Teil eines ersten Telekommunikationsnetzes sein (im Falle mehrerer Telekommunikationseinrichtung müssen diese jedoch nicht Teil desselben Telekommunikationsnetzes sein). Entsprechend kann die Vermittlungskomponente, welche insbesondere als ein Server eines Datenübertragungsdienstes, wie beispielsweise als ein MMS-Relay-Server ausgebildet ist, in einem zweiten Telekommunikationsnetz vorgesehen sein, das mit dem oder den Telekommunikationsnetzen, welche dem oder den weiteren Telekommunikationseinrichtungen zugeordnet sind, verbunden ist. Dieses zweite Telekommunikationsnetz kann insbesondere als ein auf Internet-Protokollen, wie dem Hypertext Transfer Protocol, basiertes Telekommunikationsnetz ausgeführt sein.

Um das Verfahren zum Übertragen von Nutzdaten-Objekten möglichst flexibel nutzen zu können, können die Nachrichten zu und von der ersten und/oder zweiten Telekommunikationseinrichtung über eine Luftschnittstelle gesendet werden, wobei die Telekommunikationseinrichtung (oder auch die weiteren Telekommunikationseinrichtungen) vorzugsweise als ein mobiles Telekommunikationsgerät ausgebildet sein können und dabei insbesondere ein Funkmodul bzw. Mobilfunkmodul umfassen können. Die Übertragung von Nachrichten zu und von einer jeweiligen Telekommunikationseinrichtung kann dann auf Basis des WAP-Protokolls Wireless Session Protocol (WSP) oder dem Hypertext Transfer Protocol (http) erfolgen. Die Telekommunikationseinrichtung kann dabei beispielsweise als ein Mobilfunkgerät bzw. Mobiltelefon, ein Schnurlostelefon, als ein Smartphone (Kombination aus einem kleinen tragbaren Computer und einem Mobiltelefon), als ein PDA (PDA: Personal Digital Assistant = persönlicher digitaler Assistent) bzw. als ein Organizer ausgebildet sein. Weiterhin kann die Telekommunikationseinrichtung auch andere mobil erreichbare Geräte umfassen, wie einen Personal Computer (PC) oder einen Laptop, die mittels eines angeschlossenen Mobilfunkgeräts (Mobiltelefon) über ein Mobilfunknetz erreicht werden können. Das Mobilfunkgerät kann dann beispielsweise über ein Kabel an den Personal Computer bzw. Laptop angeschlossen sein oder auch diese drahtlos über eine Infrarot-Schnittstelle oder ein lokales Bluetooth-Netz kontaktieren. Dabei kann eine Telekommunikationseinrichtung, wie das Mobilfunkgerät, einschließlich des diesem zugeordneten Telekommunikationsnetzes in der Ausführung eines Mobilfunknetzes gemäß dem GSM (Global System for Mobile Communication)-Standard oder dem UMTS (Universal Mobile Telecommunications System)-Standard usw. arbeiten. Derartige Mobilfunknetze bzw. Telekommunikationseinrichtungen gemäß dem GSM- oder UMTS-Standard können eine Plattform für WAP-Protokolle bzw. den WAP-Protokoll-Stack (WAP: Wireless Application Protocol) darstellen, mittels dem Daten (Mitteilungen bzw. Nutzdaten-Objekte) im jeweiligen Mobilfunknetz übertragbar sind.

Vorteilhafterweise sind das erste und das zweite Telekommunikationsnetz durch eine Verbindungskomponente miteinander verbunden. Im Falle der Verwendung des WAP-Protokoll-Stack, wie oben erwähnt, ist es möglich, durch die Verwendung eines WAP-Gateways als Schnittstelle bzw. Verbindungskomponente zwischen einem Mobilfunknetz und einem anderen Netzwerk, beispielsweise einem auf einem Internet-Protokoll basierenden Netz, eine Verbindung zu diesem zu schaffen. Auf diese Weise ist es möglich, dass sich die Vermittlungskomponenten in einem auf einem Internet-Protokoll basierenden Netzwerk, wie dem Internet, befindet, wobei die Daten (Nachrichten, Nutzdatenobjekte) über ein WAP-Gateway und schließlich über eine Luftschnittstelle eines Mobilfunknetzes zwischen der oder den Basisstationen des Mobilfunknetzes und an die jeweiligen Telekommunikationsgeräte von Benutzern übertragen werden kön nen. In diesem Zusammenhang sei erwähnt, dass insbesondere im Rahmen des MMS-Datenübertragungsdienstes Nachrichten von dem MMS-Relay-Server als Vermittlungskomponente automatisch, d.h. ohne Anforderung eines Telekommunikationsgeräts, an ein Telekommunikationsgerät mittels WAP-Push gesendet werden können. Hierbei dient der MMS-Relay-Server als sogenannter Push-Initiator, der das WAP-Gateway bzw. eine Unterkomponente von diesem, nämlich das Push-Proxy-Gateway, dazu veranlasst, eine Nachricht per WAP-Push an das Telekommunikationsgerät zu senden. Beispielsweise wird gemäß dem MMS-Übertragungsdienst die Empfängerbenachrichtungsnachricht mittels WAP-Push an das Telekommunikationsgerät übertragen.

Es sei erwähnt, dass die Nutzdatenobjekte allgemein Textinformationen, Audioinformationen, Videoinformationen, ausführbare Programme, Softwaremodule oder eine Kombination dieser Informationen umfassen können.

Gemäß einem weiteren Aspekt der Erfindung wird eine Telekommunikationsanordnung umfassend eine Vermittlungskomponente sowie zumindest eine erste Telekommunikationseinrichtung geschaffen, wobei die Telekommunikationsanordnung dafür ausgelegt ist, ein oben dargestelltes Verfahren durchzuführen.

Bevorzugte Ausführungsformen der vorliegenden Erfindung werden nachfolgend bezugnehmend auf die beiliegenden Zeichnungen näher erläutert. Es zeigen:
- Figur 1: eine schematische Darstellung eines Kommunikationsnetzes bzw. Telekommunikationsnetzes zum Durchführen des MMS, bei der zwei Dienstleistungsanbieter für eine MMS-Umgebung vorgesehen sind;
- Figur 2: eine schematische Darstellung von möglichen Schnittstellen eines MMS-Relay-Servers;
- Figur 3: ein beispielhafter Ablauf ("Transaction Flow Diagramm") zum Übertragen einer Multimedianachricht von einem Mobilfunkgerät zu einem zweiten Mobilfunkgerät;
- Figur 4: eine ausführliche Darstellung der in Figur 2 gezeigten Schnittstelle MM1, bei der ein WAP-Gateway für die Anpassung der MMS-Nutzdaten an die beiden unterschiedlichen Sitzungsschicht-Protokolle (WSP und HTTP) sorgt;
- Figur 5: einen Ausschnitt einer Benutzeroberfläche einer Telekommunikationseinrichtung zum Darstellen der in Empfängerbenachrichtigungsnachrichten vorgesehenen Optionen bzw. Informationen gemäß einer ersten Ausführungsform;
- Figur 6: einen Ausschnitt einer Benutzeroberfläche einer Telekommunikationseinrichtung zum Darstellen der in Empfängerbenachrichtigungsnachrichten vorgesehenen Optionen bzw. Informationen gemäß einer zweiten Ausführungsform.

Bevor nun ein Verfahren zum Übertragen von Nachrichten, insbesondere mittels dem MMS (Multimedia Messaging Service)-Dienst, von einer Telekommunikationseinrichtung zu einer zweiten Telekommunikationseinrichtung gemäß einer bevorzugten Ausführungsform der Erfindung erläutert werden wird, sollen zunächst noch einmal die grundlegenden Komponenten bzw. Netzwerkstrukturen zur Realisierung eines MMS-Dienstes erläutert werden.

Für Mobilfunksysteme der nächsten Generationen (2.5G und 3G), wie beispielsweise System, die nach dem UMTS (UMTS - Universal Mobile Telecommunications System)-Standard arbeiten, wird zur Zeit eine multimediafähige Variante eines mobilen Nach richtendienstes standardisiert, nämlich der MMS-Dienst, oder kurz MMS. Die Nachrichten des MMS mit multimedialen Inhalten werden im Folgenden zur besseren Abgrenzung von den Textnachrichten des SMS (Short Message Service: Kurznachrichtendienst)-Dienstes nur noch kurz MMs (MM: Multimedia Message = Multimedianachricht) genannt. Im Gegensatz zum SMS entfällt die Beschränkung auf reine Textinhalte. Beim MMS ist es möglich, Texte dem individuellen Geschmack entsprechend zu formatieren, sowie Audio- und Videoinhalte in eine Nachricht einzubetten. Eine MM kann demnach mehrere MM-Elementen oder Nutzdatenobjekte von unterschiedlichen Dateitypen (z.B. Audio oder Standbild) oder Dateiformaten (bei Standbild z.B. GIF oder JPEG) umfassen, selbst ein zeitlich festgelegter Ablauf von kleinen Präsentationen wird ermöglicht.

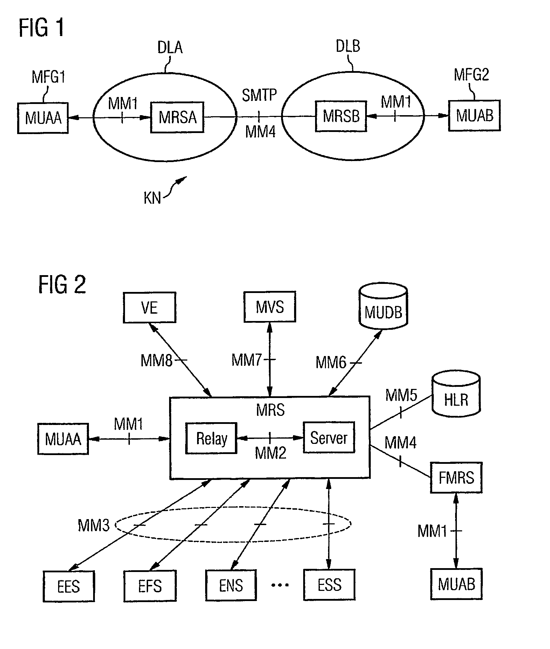

In Figur 1 ist eine mögliche Telekommunikationsanordnung bzw. eine Netzwerk-Architektur KN zum Durchführen des MMS, insbesondere gemäß einer Spezifikation des 3GPP (3rd Generation Partnership Project) dargestellt. Links in der Figur ist eine erste Telekommunikationseinrichtung in der Ausführung eines ersten Mobilfunkgeräts MFG1 gezeigt, das über eine Schnittstelle, genauer gesagt eine Luftschnittstelle, wie es noch ausführlicher bezüglich Figur 2 erläutert werden wird, mit einem Kommunikationsnetz verbunden ist (zur einfacheren Darstellung der wichtigsten Komponenten des Netzwerks, wird hier verzichtet genau zu erläutern, dass und wie die Luftschnittstelle zu einer Basisstation eines Mobilfunknetzes besteht, das wiederum mit dem Kommunikationsnetz bzw. einer ersten MMS-Netzwerkumgebung DLA verbunden ist. Entsprechendes gilt natürlich auch für die Verbindung zum unten erläuterten zweiten Mobilfunkgerät). Genauer gesagt ist das erste Mobilfunkgerät MFG1 mit einer ersten MMS-Netzwerkumgebung DLA (MMSE: Multimedia Messaging Service Environment) verbunden, die im Zuständigkeitsbereich eines ersten MMS-Dienstleistungsanbieters bzw. MMS-Providers liegt. Auf dem Mobilfunkgerät MFG1 ist eine Softwareanwendung, eine sogenannte MMS-Benutzersoftwareanwendung oder kurz MMS- Benutzer anwendung (MMS-User Agent) MUAA zur Realisierung des endgeräteseitigen Teils für den MMS vorgesehen. In der ersten MMS-Netzwerkumgebung DLA ist ein sogenannter erster MMS-Relay-Server MRSA vorgesehen, der Telekommunikationseinrichtungen bzw. Telekommunikationsendgeräten, die mit der ersten MMS-Netzwerkumgebung verbunden sind, die MMS-Funktionalität zur Verfügung stellt.

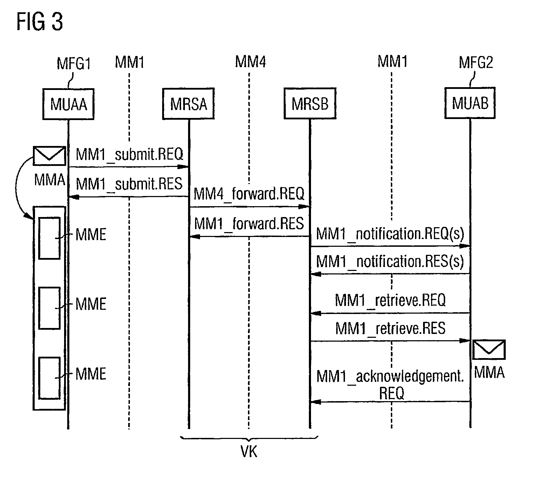

Die ersten MMS-Netzwerkumgebung DLA ist im Beispiel mit einer zweiten MMS-Netzwerkumgebung DLB eines zweiten MMS-Dienstleistungsanbieters bzw. MMS-Providers über eine Schnittstelle MM4 (vgl. weitere Erläuterungen mit Bezug auf Figur 2), die beispielsweise über das SMTP (Simple Mail Transfer Protocol)-Protokoll realisiert wird, verbunden. In der zweiten MMS-Netzwerkumgebung DLB ist ein zweiter MMS-Relay-Server MRSB vorgesehen, der Telekommunikationseinrichtungen bzw. Telekommunikationsendgeräten, wie dem Mobilfunkgerät MFG2, die mit der zweiten MMS-Netzwerkumgebung DLB verbunden sind, die MMS-Funktionalität zur Verfügung stellt. Auf dem Mobilfunkgerät MFG2 ist wieder eine Softwareanwendung, hier eine MMS-Benutzeranwendung (MMS-User Agent) MUAB zur Realisierung des endgeräteseitigen Teils für den MMS vorgesehen. Sollen Multimedianachrichten, insbesondere mit Nutzdatenobjekten von dem Mobilfunkgerät MFG1 an das Mobilfunkgerät MFG2 übertragen werden, so können die beiden MMS-Relay-Server MRSA und MRSB in den MMS-Netzwerkumgebungen DLA und DLB zu einer Vermittlungskomponente zusammengefasst werden, wie es später noch mit Bezug auf Figur 3 erläutert werden wird.

Ein charakteristisches Merkmal des MMS ist, dass bei der Zustellung von Multimedianachrichten (MMs) an ein Empfangsgerät (Mobilfunkgerät) zwischen dem sogenannten PUSH-Modus, bei dem eine ankommende Multimedianachricht unverzüglich von einem MMS-Relay-Server an die MMS-Benutzeranwendung des Empfangsgeräts übertragen wird, und dem sogenannten PULL-Modus, bei dem der Empfänger bzw. Empfangsgerät zunächst über eine neu beim MMS-Relay-Server eingetroffene Multimedianachricht mittels einer MMS-Benachrichtigung bzw. Empfängerbenachrichtigungsnachricht informiert wird und daraufhin selbst entscheiden kann, ob bzw. wann er diese Multimedianachricht vom MMS-Relay-Server auf sein Mobilfunkgerät herunterlädt, unterschieden wird.

Mögliche definierte Schnittstellen zum Anschluss weiterer Netzwerkelemente bzw. Netzwerkkomponenten an einen MMS-Relay-Server MRS, wie dem MMS-Relay-Server MRSA oder MRSB, sind in Figur 2 gezeigt. Neben einer Schnittstelle MM1, über die eine MMS-Benutzeranwendung MUAA und ein MMS-Relay-Server miteinander in Verbindung stehen, können über Schnittstellen MM3 beliebige externe Server, wie zum Beispiel E-mail-Server EES, Fax-Server EFS, weitere Nachrichtenserver (z.B. für UMS: Unified Message Services) ENS oder sonstige Server ESS, usw. an den MMS-Relay-Server MRS angeschlossen werden. Die Anbindung fremder ("foreign") MMS-Dienstleistungsanbieter (MMS-Provider) wird über eine Schnittstelle MM4 realisiert, wie bereits bezüglich Figur 1 angedeutet. Eine Schnittstelle MM5 verbindet den MMS-Relay-Server MRS mit dem HLR (HLR: Home Location Register) eines Mobilfunk-Netzbetreibers, in dem die individuellen Kundendaten bzw. Benutzerdaten eines jeden Mobilfunkteilnehmers gespeichert sind (das HLR befindet sich in der Regel im Zuständigkeitsbereich des Netzbetreibers, der nicht zwangsläufig mit dem MMS-Dienstleistungsanbieter identisch sein muss). Den Anschluss einer oder mehrerer MMS-Benutzerdatenbanken bzw. "MMS User Data Base(s)" MUDB gestattet eine Schnittstelle MM6. Über eine Schnittstelle MM7 wird der Anschluss von Servern MVS ermöglicht, die von einem VASP (VASP: Value Added Service Provider = Mehrwertdienstanbieter) betrieben werden und den MMS-Benutzern Mehrwertdienste zur Verfügung stellen. Schließlich existiert noch eine weitere Schnittstelle MM8 zum Anschluss einer Netzwerkeinheit bzw. Vergebührungseinheit VE an den MMS-Relay-Server MRS, in der alle relevanten Informationen zum Vergebühren des MMS gesammelt und ausgewertet werden. In dem MMS-Relay-Server MRS stellt eine Schnittstelle MM2 eine Verbindung zwischen Relay und Server her.

Im Folgenden wird anhand von Figur 3 der Austausch von Daten, insbesondere von Nutzdatenobjekten zwischen den in Figur 1 dargestellten MMS-Einheiten bzw. MMS-Datenübertragungseinheiten beim Versenden einer Multimedianachricht MMA mit Multimedianachricht-Elementen MME von dem Mobilfunkgerät MFG1 und Empfangen von dem Mobilfunkgerät MFG2 anhand von gemäß dem 3GPP definierten sogenannten "abstract messages" (Abstraktnachrichten) genauer beschrieben. Eine Abstraktnachricht besteht aus mindestens einem Informationselement bzw. "information element". Bei Verwendung des MMS kann ein Absender, im Beispiel das Mobilfunkgerät MFG1 bzw. die MMS-Benutzeranwendung MUAA eine Multimedianachricht MMA über die Luftschnittstelle MM1 an den MMS-Relay-Server MRSA seines MMS-Dienstleistungsanbieters mit der Abstraktnachricht (später auch als Übermittlungsnachricht bezeichnet) "MM1_submit.REQ" schicken. Der MMS-Relay-Server MRSA bestätigt den korrekten Empfang der Multimedianachricht von der MMS-Benutzeranwendung MUAA mit der Abstraktnachricht "MM1_submit.RES". Die Übertragung der MMA an den MMS-Relay-Server MRSB in der MMS-Umgebung DLB (vgl. Figur 1) des Empfängers bzw. des Ziel-Mobilfunkgeräts geschieht mit dem Abstraktnachricht-Paar "MM4_forward.REQ" (enthält die eigentliche Multimedianachricht) und "MM4_forward.RES" (die eine Rückmeldung bzw. Bestätigung an den MMS-Relay-Server MRSA zurücksendet). Danach wird das Empfängergerät MFG2 bzw. dessen MMS-Benutzeranwendung MUAB über die auf dem MMS-Relay-Server MRSB zum Herunterladen bereitliegende Multimedianachricht MMA mit der Abstraktnachricht bzw. Empfängerbenachrichtigungsnachricht "MM1_notification.REQ" informiert. In dieser MMS-Empfängerbenachrichtigungsnachricht ist der URI (URI - Uniform Resource Identifier) des Speicherplatzes bzw. Speicherorts der Multimedianachricht auf dem MMS-Relay-Server MRSB als Referenz enthalten. Die Abstraktnachricht "MM1_notification.RES" dient vorrangig als Bestätigung für den korrekten Empfang der Empfängerbenachrichtigungsnachricht bei der MMS-Benutzeranwendung MUAB und dazu, dem MMS-Dienstleistungsanbieter die Art der gewünschten Zustellung (ob im "PUSH"- oder "PULL"-Modus) mitzuteilen. Mit der Abstraktnachricht oder Zustellungsanforderungsnachricht "MM1_retrieve.REQ" kann der Empfänger, nämlich die MMS-Benutzeranwendung MUAB das Herunterladen einer auf dem MMS-Relay-Server MRSB bereitliegenden Multimedianachricht MMA initiieren. Das Zustellen der Multimedianachricht MMA vom MMS-Relay-Server MRSB an die MMS-Benutzeranwendung MUAB erfolgt mittels der Abstraktnachricht bzw. Zustellungsnachricht "MM1_retrieve.RES". Der MMS-Relay-Server MRSB kann mit der Abstraktnachricht "MM1_acknowledgement.REQ" von der MMS-Benutzeranwendung MUAB über den Ausgang des Herunterladens der Multimedianachricht MMA informiert werden. Es sei bemerkt, dass zur einfachen Darstellung einer Übertragung einer Multimedianachricht von dem Mobilfunkgerät MFG1 über die beiden MMS-Relay-Server MRSA und MRSB zu dem Mobilfunkgerät MFG2, die die beiden MMS-Relay-Server MRSA und MRSB auch als eine Vermittlungskomponente VK zwischen den Mobilfunkgeräten betrachten werden können. Würde sich das Mobilfunkgerät MFG2 auch im Wirkungsbereich des MMS-Umgebung des ersten MMS-Dienstleistungsanbieters befinden, so würde die Vermittlungskomponente VK lediglich den MMS-Relay-Server MRSA umfassen.

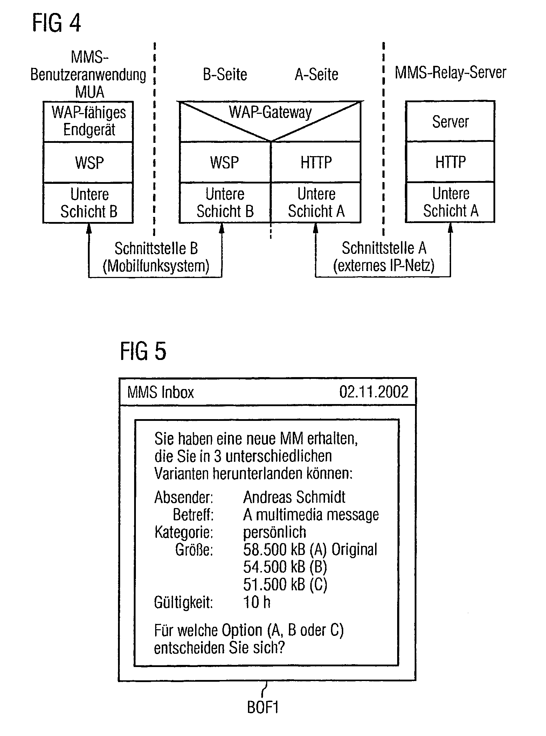

Wenn ein Mobilfunk-Netzbetreiber in seinem PLMN (PLMN - Public Land Mobile Network) ein WAP-Implementierung von MMS einsetzt, besteht die oben beschriebene Schnittstelle MM1 bei genauerer Betrachtung aus zwei Abschnitten, die durch eine spezielle Netzwerkkomponente, ein sogenanntes WAP-Gateway, (WAP - Wireless Application Protocol) miteinander verbunden sind. Das WAP-Gateway zwischen einem MMS-Relay-Server eines MMS-Dienstleistungsanbieters und dem Kern-Netzwerk bzw. "Core Network" eines Mobilfunk-Systems bzw. Mobilfunknetzwerks erfüllt vorrangig die Aufgabe, die zu übertragenden Daten an die auf beiden Seiten unterschiedlichen Protokollschichten anzupassen. Zum besseren Verständnis zeigt Figur 4 eine de taillierte Ausgestaltung der Schnittstelle MM1 für die WAP-Implementierung von MMS zwischen einem mobilen Telekommunikationsendgerät, wie einem Mobilfunkgerät, mit einer MMS-Benutzeranwendung MUA und einem MMS-Relay-Server MRS. Auf der "A-Seite" bzw. (in Richtung eines externen IP (Internetprotokoll)-Netzwerk) kommt als Sitzungsschicht-Protokoll "http" (http: Hypertext Transfer Protocol) und auf der "B-Seite" (in Richtung eines Mobilfunksystem bzw. Mobilfunknetzwerks, PLMN) WSP (WSP - Wireless Session Protocol) zum Einsatz.

Es ist nun möglich, dass ein MMS-Dienstleistungsanbieter vor dem Aussenden einer MMS-Empfänger-Benachrichtigung bzw. Empfängerbenachrichtigungsnachricht eine individuelle Anpassung der zuzustellenden Multimedianachricht bzw. der in dieser enthaltenen Nutzdatenobjekte vornehmen kann. Eine derartige Anpassung kann beispielsweise auf den individuellen Eigenschaften des Empfangsgerätes, auf den individuellen Einstellungen des Benutzers oder auf eventuell in einer Multimedianachricht enthaltenen bzw. aus einer Multimedianachricht gewonnenen Beschreibungsinformationen (sogenannten Meta-Daten, beispielsweise nach dem MPEG-7 Standard) beruhen. Auch Kombinationen aus diesen drei Möglichkeiten sind denkbar. Dies soll im Folgenden näher erläutert werden.
1. Anpassung einer Multimedianachricht bzw. der in ihr enthaltenen Nutzdatenobjekte gemäß den individuellen Eigenschaften des Empfangsgerätes: Mobilfunkgeräte, wie Mobiltelefone, unterscheiden sich in der Regel durch ihre charakteristischen Eigenschaften bzw. Fähigkeiten voneinander. So können beispielsweise die Eigenschaften der Anzeigevorrichtungen teilweise erheblich (z.B. in Größe und Auflösung) voneinander variieren oder auch die Fähigkeiten, bestimmte Dateitypen und/oder Dateiformate darstellen und/oder verarbeiten zu können. Damit ein Mobilfunk-Netzbetreiber bzw. Dienstanbieter ("Service Provider") Kenntnis über die Eigenschaften bzw. Fähigkeiten eines WAP-fähigen Endgerätes erlangen kann, wurde vom WAP Forum das sogenannte "UA Prof" (UA Prof: User Agent Profile = Benutzeranwendungsprofil) standardisiert, mit dessen Hilfe jedem einzelnen, im Mobilfunknetz eingebuchten Endgerät bzw. Mobilfunkgerät netzwerkseitig das passende charakteristische Geräteprofil zugeordnet werden kann.
   Auch beim MMS sollen in Zukunft WAP-"UA Prof" folgendermaßen eingesetzt werden: Besitzt ein Mobilfunkkunde bzw. ein Mobilfunkbenutzer ein Endgerät bzw. Mobilfunkgerät mit einer WAP-basierten MMS-Benutzeranwendung und ist er für die Nutzung des MMS bei einem MMS-Dienstleistungsanbieter registriert, so sollen auch MMSspezifische Einträge eine Teilmenge des "UA Profs" bzw. Benutzerprofils darstellen (z. B. die maximale Größe für eingehende Multimedianachrichten, usw.). Der Zugriff vom MMS-Relay-Server auf die Benutzerprofil-Informationen kann über die in Figur 2 dargestellte Schnittstelle MM6 (MMS-Relay-Server zu MMS-Benutzerdatenbank(en) MUDB) geschehen. Besitzt ein MMS-Dienstanbieter Kenntnisse über die individuellen Eigenschaften bzw. Fähigkeiten eines mobilen Telekommunikationsendgeräts (z.B. Mobilfunkgeräts) und einer darauf installierten MMS-Benutzeranwendung (MMS User Agent), so kann der MMS-Relay-Server vor dem Aussenden einer MMS-Empfänger-Benachrichtigung (Empfängerbenachrichtigungsnachricht) eine gezielt auf das Endgerät des Empfängers abgestimmte Dateityp- bzw. Dateiformat-Konvertierung von einzelnen Multimedianachricht-Elementen bzw. Nutzdatenobjekten ausführen, damit die Multimedianachricht auf dem Endgerät des Empfängers optimal dargestellt werden.
2. Anpassung einer Multimedianachricht gemäß den individuellen Einstellungen eines Benutzers: Im MMS kann jeder Benutzer netzwerkseitig Einstellungen vornehmen und damit den MMS seinen individuellen Vorstellungen entsprechend konfigurieren. Beispielsweise könnte eine Benutzer-Einstellung lauten, dass alle eintreffenden Multimedia nachrichten, die Multimedianachricht-Elemente bzw. Nutzdatenobjekte eines bestimmten Daten-Typs enthalten, automatisch und ohne MMS-Empfängerbenachrichtigung (Empfängerbenachrichtigungsnachricht) an eine E-mail-Adresse weitergeleitet werden.
3. Anpassung einer Multimedianachricht gemäß den in einer Multimedianachricht enthaltenen Meta-Daten: Eventuell können in einer Multimedianachricht auch Beschreibungsinformationen (sogenannten Meta-Daten) enthalten sein bzw. aus einer Multimedianachricht gewonnen werden, mit denen die Bedeutung von einzelnen Multimedianachricht-Elementen (Nutzdatenobjekten) erläutert werden kann, sowie Abhängigkeiten zwischen den einzelnen Multimedianachricht-Elementen (Nutzdatenobjekten) ausgedrückt werden können. Beispielsweise könnte ein Multimedianachricht-Element (Nutzdatenobjekt) vom Typ "Text" als Hauptbestandteil, ein Multimedianachricht-Element vom Typ "Standbild" als Hintergrundbild oder ein Multimedianachricht-Element vom Typ "Audio" als (gesprochener) Kommentar, der sich auf das Standbild bezieht, gekennzeichnet werden.

In einem MMS-Relay-Server in der empfängerseitigen MMS-Umgebung kann eine eintreffende Multimedianachricht vor dem Aussenden der MMS-Empfänger-Benachrichtigung (Empfängerbenachrichtigungsnachricht) auf Basis der drei oben beschrieben Datensätze (und Kombinationen daraus) adaptiert werden.

Damit nun der Empfänger eine verbesserte Kontrolle der zu empfangenden Multimedianachricht mit den darin enthaltenen Nutzdatenobjekten hat und Informationen darüber erhält, ob und wie eine Multimedianachricht bzw. die enthaltenen Elemente bzw. Nutzdatenobjekte adaptiert worden sind wird gemäß einer Ausführungsform der Erfindung folgendes vorgeschlagen.

Die Ausführungsform sieht vor, dass mehrere alternative MMS-Empfänger-Benachrichtigungen (Empfängerbenachrichtigungs nachrichten) für unterschiedlich adaptierte Varianten derselben Multimedianachricht an den Empfänger gesendet werden können. Auf diese Weise werden dem Empfänger mehrere alternative Optionen zum Herunterladen der gleichen Multimedianachricht angeboten. Unter Varianten sind dabei sowohl die Originalnachricht bzw. die in der Originalnachricht enthaltenen Nutzdatenobjekte als auch die adaptierte Nachricht bzw. die adaptierten Nutzdatenobjekte zu verstehen.

Um dies zu realisieren wird ein rückwärtskompatibeler Abbildungs-Mechanismus vorgestellt, der die Zuordnung der einzelnen MMS-Empfänger-Benachrichtigungen (Empfängerbenachrichtigungsnachrichten) in der MMS-Benutzeranwendung des Empfängers zu einer Multimedianachricht erlaubt.

Es ist natürlich auch denkbar, die Informationen über die unterschiedlichen Herunterlad-Optionen für die einzelnen Varianten in eine einzige, neu definierte Multipart-MMS-Empfänger-Benachrichtigung zu packen, jedoch müsste in diesem Fall auf eine Rückwärtskompatibilität verzichtet werden. Eine alte bzw. herkömmliche MMS-Benutzeranwendung (MMS User Agent) könnte mit der neuen und für ihn unbekannten Struktur einer Multipart-MMS-Empfänger-Benachrichtigung nichts anfangen.

Damit die alternativen Optionen zum Herunterladen einer MM (in verschiedenen Varianten) in einer für den Empfänger leicht verständlichen Art und Weise möglich ist, wird gemäß der Ausführungsform weiterhin eine mögliche Ausgestaltung des HMI (HMI - Human Machine Interface, z. B. in Form eines Displays) auf Seiten der empfangenden MMS-Benutzeranwendung (MMS User Agent) unten noch beschrieben werden.

Zur Verbesserung der Kontrollmöglichkeiten beim Herunterladen einer Multimedianachricht sollen einem Empfänger bzw. einem empfangenden Endgerät mehrere alternative Herunterlad-Optionen für die gleiche Multimedianachricht durch Anfertigung und Versand mehrerer unterschiedlicher MMS-Empfänger-Benachrichtigungen (Empfängerbenachrichtigungsnachrichten) für netzwerkseitig (insbesondere vom MMS-Relay-Server der MMS-Umgebung des MMS-Dienstanbieters des Empfängers) verschieden adaptierte Varianten einer Multimedianachricht basierend auf mindestens einem der folgenden Datensätze angeboten bzw. übermittelt werden:
i) Informationen über die individuellen Eigenschaften bzw. Fähigkeiten des mobilen Telekommunikationsendgeräts, wie eines Mobilfunkgeräts bzw. Mobiltelefons, und der darauf installierten bzw. mit diesem verbundenen MMS-Benutzeranwendung (MMS User Agent). Die Informationen über die individuellen Eigenschaften bzw. Fähigkeiten eines Telekommunikationsendgeräts bzw. einer Telekommunikationseinrichtung und der MMS-Benutzeranwendung (MMS User Agents) diesbezüglich könnten beispielsweise gemäß einem WAP-Benutzerprofil bzw. WAP-"UA Prof" ausgestaltet sein und möglicherweise aus zurückliegenden WSP-Sitzungen, d.h. vorherigen MMS-Herunterlad-Vorgängen, stammen;
ii) Informationen über die individuellen Präferenzen des MMS-Benutzers. Die Informationen über die individuellen Benutzer-Präferenzen diesbezüglich könnten beispielsweise Bestandteil der MMS-Benutzerdatenbank(en) bzw. MMS-"User Data Bases" MUDB (vgl. dazu Figur 2) sein; und/oder
iii) Beschreibungsinformationen (sogenannten Meta-Daten), welche die Bedeutung von einzelnen Multimedianachricht-Elementen (Nutzdatenobjekten) erläutern und/oder Beziehungen bzw. Abhängigkeiten zwischen einzelnen Multimedianachricht-Elementen ausdrücken. Die Beschreibungsinformationen (Meta-Daten) diesbezüglich könnten beispielsweise gemäß MPEG-7 ausgestaltet sein und möglicherweise als eigenständiges Multimedianachricht-Element (Nutzdatenobjekt) in der Multimedianachricht enthalten sein oder vom adaptierenden MMS-Relay-Server aus einer eintreffenden Multimedianachricht gewonnen werden.

Ferner dient zur Verbesserung der Kontrollmöglichkeiten der Einsatz eines rückwärtskompatiblen Mapping-Mechanismus bzw. Abbildungs-Mechanismus für MMS-Empfänger-Benachrichtigungen (Empfängerbenachrichtigungsnachrichten):
a) Vorteilhafterweise werden zusammengehörige MMS-Empfänger-Benachrichtigungen im adaptierenden MMS-Relay-Server vor der Zustellung an die MMS-Benutzeranwendung des Empfängers bzw. Empfängerendgeräts durch ein zusätzliches neu definiertes Kopf-Feld gekennzeichnet;
b) Weiter kann dabei vorteilhafterweise eine Sequenznummer (wiederum in einem neu definiertes Kopf-Feld) verwendet werden, um in der MMS-Benutzeranwendung des Empfängers feststellen zu können, ob bereits alle zusammengehörigen MMS-Empfänger-Benachrichtigungen eingetroffen sind. Aus der Reihenfolgeninformation in den jeweiligen unterschiedlichen Empfängerbenachrichtigungsnachrichten soll ferner auch hervorgehen, welche der MMS-Empfänger-Benachrichtigungen mit der unveränderten Originalversion des mindestens einen Nutzdatenobjektes in Beziehung steht. Beispielsweise könnte der Wert "0" für die Sequenznummer anzeigen, dass es sich um die Originalversion handelt, während Werte >0 anzeigen, dass es sich um adaptierte/veränderte Versionen von Nutzdatenobjekten bzw. Übermittlungsnachrichten (d.h. Multimedianachrichten MM) handelt;
c) Schließlich können die einzelnen MMS-Empfänger-Benachrichtigungen in der MMS-Benutzeranwendung (MMS User Agent) des Empfängers anhand von Identifikationsnummer und Sequenznummer zugeordnet werden.

Alternativ zu a) und b) könnte die Kennzeichnung für zusammengehörige MMS-Empfänger-Benachrichtigungen und/oder die Sequenznummer und/oder eine Maximalnummer, die die Gesamtzahl der bereitgestellten Varianten bzw. die Gesamtzahl der erzeugten oder versendeten MMS-Empfänger-Benachrichtigungen angibt, auch speziell codiert und in ein schon bekanntes Kopf-Feld integriert werden (beispielsweise als zusätzliche Parameter).

Außerdem können die Kontrollmöglichkeiten weiter verbessert und die Information eines Empfängers einer Multimedianachricht weiter verbessert werden, indem eine komfortable Darstellung der Informationen aus den einzelnen MMS-Empfänger-Benachrichtungen bezüglich alternativer Herunterlad-Optionen, d.h. für verschiedene Varianten einer Multimedianachricht bzw. deren Nutzdatenobjekte, durch eine besonders vorteilhafte Ausgestaltung des HMI in der MMS-Benutzeranwendung (MMS User Agent) des Empfängers bereitgestellt wird.

Im folgenden sollen nun Beispiele erläutert werden, die die oben genannten Aspekte zur Verbesserung der Kontrollmöglichkeiten beim Herunterladen von auf einem MMS-Relay-Server bereitstehenden Multimedianachrichten verdeutlichen:

### A. Anbieten alternativer Herunterlad-Optionen

Zunächst soll der Aspekt des Anbietens alternativer Herunterlad-Optionen für die gleiche Multimedianachricht durch Anfertigung und Versand mehrerer unterschiedlicher MMS-Empfänger-Benachrichtigungen (Empfängerbenachrichtigungsnachrichten) für netzwerkseitig verschieden adaptierte bzw. bearbeitete Varianten einer Multimedia Message beleuchtet werden.

Die nun folgenden Beispiele basieren alle auf der Annahme, dass eine beispielhafte Multimedianachricht bestehend aus drei Multimedianachricht-Elementen bzw. Nutzdatenobjekten (MME), nämlich einem 20 kB großen Text, einem Bild mit 8 bit Farbtiefe und einer 30 kB großen Sprachnotiz von einem Sender (d.h. von einer ersten Telekommunikationseinrichtung, wie ei nem Mobilfunkgerät) an einen Empfänger (d.h. eine zweite Telekommunikationseinrichtung, wie einem zweiten Mobilfunkgerät) gesendet werden soll, wie es auch bereits mit Bezug auf Figur 3 erläutert worden ist. Als Abwandlung zu oben gemachten Erläuterung zu Figur 3 wird jedoch nun in der MMS-Umgebung des MMS-Dienstleistungsanbieters des Empfängers, insbesondere in dessen MMS-Relay-Server (bezüglich Figur 3 wäre das der MMS-Relay-Server MRSB, wenn die Multimedianachricht MMA vom Mobilfunkgerät MFG1 gesendet wird) vor dem Aussenden der mindestens einen MMS-Empfänger-Benachrichtigung (Empfängerbenachrichtigungsnachricht) mindestens ein Nutzdatenobjekt abhängig von den unter den Punkten i) bis iii) beschriebenen Informationen adaptiert bzw. geändert.

### Beispiel 1: Erstellen von mehreren MMS-Empfänger-Benachrichtigungen für eine Multimedianachricht (MMA) basierend auf den individuellen Eigenschaften bzw. Fähigkeiten des mobilen Telekommunikations-Endgerätes und der MMS-Benutzeranwendung (MMS User Agents)

Der MMS-Relay-Server (gemäß oben gemachter Annahme der MMS-Relay-Server MRSB, vgl. Figur 3) soll die beispielhafte Multimedianachricht (MMA) an die MMS-Benutzeranwendung (MMS User Agent) MUAB des Empfängers, das Mobilfunkgerät MFG2 zustellen. In einem netzwerkseitig gespeicherten Datensatz (vgl. Punkt i oben), der die individuellen Eigenschaften bzw. Fähigkeiten des Mobilfunkgeräts MFG2 und der MMS-Benutzeranwendung MUAB enthält, ist beispielsweise vermerkt, dass das Empfangsgerät MFG2 nur schwarz-weiße Bilder darstellen kann. Eventuell möchte der Benutzer (des Mobilfunkgeräts MFG2) aber trotzdem ein Farbbild vom MMS-Relay-Server MRSB herunterladen, weil er das Multimedianachricht-Element (Nutzdatenobjekt) später in Farbe ausdrucken möchte.

Der MMS-Relay-Server (MRSB) erstellt nun zusätzlich zu der empfangenen Multimedianachricht (MMA) nach den Regeln des Datensatzes mit den individuellen Eigenschaften bzw. Fähigkeiten des mobilen Telekommunikations-Endgerätes eine weitere Multimedianachricht-Variante, bei der sich die Farbtiefe des Bilds bzw. Bilddatenobjekts von dem Original unterscheidet. Dies ist folgender Tabelle 1 gezeigt, in dargestellt ist, dass der MMS-Relay-Server von der o-riginalen Multimedianachricht-Variante 1A eine adaptierte Multimedianachricht-Variante 1B erstellt hat, die an Stelle des Farbbildes ein schwarz-weißes Bild mit unterschiedlicher Farbtiefe aufweist. Die Multimedianachricht-Elemente vom Typ "Text" und "Audio" bleiben unverändert:

**Tabelle 1**

| | **MM-Variante 1A** | **MM-Variante 1B** |
|---|---|---|
| **Text** | Original | Original |
| **Textgröße** | 20 kB | 20 kB |
| **Bild** | Original | Verändert |
| **Auflösung** | 100 x 80 Bildpunkte | 100 x 80 Bildpunkte |
| **Farbtiefe** | 8 bit | 2 bit |
| **Bildgröße** | 8 kB | 2 kB |
| **Audio** | Original | Original |
| **Audiogröße** | 30 kB | 30 kB |

In einem nächsten Schritt erstellt der MMS-Relay-Server MRSB für die ursprüngliche bzw. originale Multimedianachricht-Variante 1A und die neu erzeugte Multimedianachricht-Variante 1B jeweils eine eigene MMS-Empfänger-Benachrichtigung. Beide MMS-Empfänger-Benachrichtigungen verweisen auf den prinzipiell gleichen Inhalt, der jetzt allerdings in zwei unterschiedlich adaptierten Varianten vorliegt. Jede Multimedianachricht-Variante wird mittels eines eigenen URIs referenziert. Die jeweiligen MMS-Empfänger-Benachrichtigungen "MM1_notification.REQ(s)" werden dann, wie es in Figur 3 gezeigt ist, von dem MMS-Relay-Server MRSB an das Empfängerendgerät MFG2 gesendet (durch das Anfügen von "(s)" an "MM1_notification.REQ" in Figur 3 soll gekennzeichnet werden, dass hier gemäß der Ausführungsform der Erfindung eine Mehrzahl von MMS-Empfänger-Benachrichtigungen bzw. Empfängerbenachrichtigungsnachrichten aufgrund einer Multimedianachricht (MMA) nun zum Empfänger gesendet werden).

### Beispiel 2: Erstellen von mehreren MMS-Empfänger-Benachrichtigungen für eine Multimedianachricht (MMA) basierend auf den individuellen Präferenzen des MMS Benutzers

Wieder mit Bezug auf Figur 3 soll der MMS-Relay-Server MRSB die beispielhafte Multimedianachricht MMA an die MMS-Benutzeranwendung (MMS User Agent) MUAB des Empfängers bzw. Mobilfunkgeräts MFG 2 zustellen. In einem netzwerkseitig gespeicherten Datensatz, der die individuellen Präferenzen des MMS Benutzers (nach Punkt ii)) enthält, ist beispielsweise vermerkt, dass alle in einer Multimedianachricht enthaltenen Bilder vor der Zustellung der Multimedianachricht in zwei vom Benutzer definierten Stufen herunterskaliert werden sollen (eine Reduktion der Farbtiefe wäre selbstverständlich ebenso denkbar). Der Empfänger hat diese Einstellungen möglicherweise vorgenommen, um das Datenvolumen sowohl bei der Zustellung der Multimedianachricht über die Schnittstelle MM1 als auch beim Abspeichern der Multimedianachricht in seinem mobilen Telekommunikations-Endgerät möglichst gering zu halten. Damit könnten zum einen Kosten für das Herunterladen reduziert (abhängig vom Abrechnungsmodell des MMS-Dienstanbieters) und zum anderen eine größere Anzahl von Multimedianachrichten im Empfängergerendgerät abgespeichert werden. Der MMS-Relay-Server MRSB erstellt nun zusätzlich zu der empfangenen ursprünglichen Multimedianachricht MMA (Multimedianachricht-Variante 2A) nach den Regeln des Datensatzes mit den individuellen Präferenzen zwei weitere Multimedianachricht-Varianten 2B und 2C (genauer gesagt werden Varianten des Bildes bzw. Bildobjekts erzeugt, wobei das Text- und das Audio-Objekt in der ursprünglichen Form erhalten bleibt), die sich bezüglich des Bildformates voneinander unterscheiden, wie es in der folgenden Tabelle 2 gezeigt ist:

**Tabelle 2**

| | **MM-Variante 2A** | **MM-Variante 2B** | **MM-Variante 2C** |
|---|---|---|---|
| **Text** | Original | Original | original |
| **Textgröße** | 20 kB | 20 kB | 20 kB |
| **Bild** | Original | Verändert | verändert |
| **Auflösung** | 100 x 80 Bildpunkte | 75 x 60 Bildpunkte | 50 x 30 Bildpunkte |
| **Bildgröße** | 8 kB | 4,5 kB | 1,5 kB |
| **Audio** | Original | Original | original |
| **Audiogröße** | 30 kB | 30 kB | 30 kB |

In einem nächsten Schritt erstellt der MMS-Relay-Server MRSB für die ursprüngliche Multimedianachricht-Variante 2A und die beiden neu erzeugten Multimedianachricht-Varianten 2B und 2C jeweils eine eigene MMS-Empfänger-Benachrichtigung. Alle drei verweisen auf den prinzipiell gleichen Inhalt, der jetzt allerdings in drei unterschiedlichen bzw. adaptierten Varianten vorliegt. Jede Multimedianachricht-Variante wird mittels eines eigenen URIs referenziert. Die jeweiligen MMS-Empfänger-Benachrichtigungen "MM1_notification.REQ(s)" werden dann, wie es in Figur 3 gezeigt ist, von dem MMS-Relay-Server MRSB an das Empfängerendgerät MFG2 gesendet (durch das Anfügen von "(s)" an "MM1_notification.REQ" in Figur 3 soll wieder gekennzeichnet sein, dass hier gemäß der Ausführungsform der Erfindung eine Mehrzahl von MMS-Empfänger-Benachrichtigungen bzw. Empfängerbenachrichtigungsnachrichten aufgrund einer Multimedianachricht (MMA) nun zum Empfänger gesendet werden).

### Beispiel 3: Erstellen von mehreren MMS-Empfänger-Benachrichtigungen für eine Multimedianachricht (MMA) basierend auf Meta-Daten (Bedeutungen von bzw. Abhängigkeiten zwischen einzelnen Multimedianachricht-Elementen bzw. Nutzdatenobjekten)

Wieder mit Bezug auf Figur 3 soll der MMS-Relay-Server MRSB die beispielhafte Multimedianachricht MMA an die MMS-Benutzeranwendung (MMS User Agent) des Empfängers bzw. des Empfängergeräts MFG2 zustellen. Die Beschreibungsinformationen (vgl. dazu Punkt iii)) erläutern die Beziehung der einzelnen Multimedianachricht-Elemente (Nutzdatenobjekte) im Beispiel wie folgt: Der Text bzw. das Text-Objekt ist die Hauptnachricht und unabhängig von den anderen beiden Multimedianachricht-Elementen. Das Multimedianachricht-Element vom Typ "Audio" enthält einen gesprochenen Kommentar, der sich auf das Multimedianachricht-Element vom Typ "Bild" bzw. "Standbild" bezieht und ohne das Bild bedeutungslos ist (zum Beispiel: "Wenn Du genau hinguckst, erkennst Du links im Hintergrund unser Ferienhaus."). Möglicherweise kann das Empfangsendgerät MFG 2 keine Bilder darstellen (diese Information wäre idealerweise Bestandteil der individuellen Eigenschaften bzw. Fähigkeiten des Mobilfunkgeräts MFG2 und der MMS-Benutzeranwendung (MMS User Agent) MUAB nach Beispiel 1). Der MMS-Relay-Server MRSB kann nun anhand der Meta-Daten erkennen, dass das Audio-Objekt bzw. die Audio-Datei ohne das Standbild für den Empfänger nutzlos ist und daraufhin eine oder mehrere entsprechend adaptierte Multimedianachricht-Variante(n) generieren und dem Benutzer zum Herunterladen anbieten, wie es in der folgenden Tabelle 3 gezeigt ist:

**Tabelle 3**

| | **MM-Variante 3A** | **MM-Variante 3B** | **MM-Variante 3C** |
|---|---|---|---|
| **Text** | Original | Original | original |
| **Textgröße** | 20 kB | 20 kB | 20 kB |
| **Bild** | Original | Entfernt | entfernt |
| **Auflösung** | 100 x 80 Bildpunkte | Entfällt | entfällt |
| **Bildgröße** | 8 kB | Entfällt | entfällt |
| **Audio** | Original | Original | entfernt |
| **Audiogröße** | 30 kB | 30 kB | entfällt |

In einem nächsten Schritt erstellt der MMS-Relay-Server MRSB für die ursprüngliche Multimedianachricht-Variante 3A und die beiden neu erzeugten Multimedianachricht-Varianten 3B und 3C jeweils eine eigene MMS-Empfänger-Benachrichtigung bzw. Empfängerbenachrichtigungsnachricht. Alle verweisen auf den prinzipiell gleichen Inhalt, der jetzt allerdings in drei unterschiedlich adaptierten Varianten vorliegt. Jede Multimedianachricht-Variante wird mittels eines eigenen URIs referenziert. Die jeweiligen MMS-Empfänger-Benachrichtigungen "MM1_notification.REQ(s)" werden dann, wie es in Figur 3 gezeigt ist, von dem MMS-Relay-Server MRSB an das Empfängerendgerät MFG2 gesendet (durch das Anfügen von "(s)" an "MM1_notification.REQ" in Figur 3 soll auch hier wieder gekennzeichnet werden, dass hier gemäß der Ausführungsform der Erfindung eine Mehrzahl von MMS-Empfänger-Benachrichtigungen bzw. Empfängerbenachrichtigungsnachrichten aufgrund einer Multimedianachricht (MMA) nun zum Empfänger gesendet werden).

### B. Einsatz eines rückwärtskompatiblen Abbildungs-Mechanismus für MMS-Empfänger-Benachrichtigungen

Damit wiederum mit Bezug auf Figur 3 und insbesondere im Nachgang an die oben unter Punkt A. erwähnten Beispiele die verschiedenen MMS-Empfänger-Benachrichtigungen "MM1_notification.REQ(s)" in der MMS-Benutzeranwendung (MMS User Agent) des Empfängers als zusammengehörig identifiziert werden können, vergibt der MMS-Relay-Server MRSB für jede ursprünglich empfangene Multimedianachricht eine eindeutige I dentifikationsnummer und ergänzt diese zusammen mit einer Maximalnummer, d.h. einer Gesamtzahl der erzeugten bzw. versendeten MMS-Empfänger-Benachrichtigungen, und einer optionalen Sequenznummer bzw. Reihenfolgennummer der MMS-Empfänger-Benachrichtigungen in jeder einzelnen MMS-Empfänger-Benachrichtigung. Anschließend werden die einzelnen MMS-Empfänger-Benachrichtigungen bzw. Empfängerbenachrichtigungsnachrichten "MM1_notification.REQ(s)" auf herkömmlichem Wege an die MMS-Benutzeranwendung (MMS User Agent) des Empfängers bzw. Empfängergeräts gesendet. Die Gesamtheit aller zusammengehörigen MMS-Empfänger-Benachrichtigungen
"MM1_notification.REQ(s)" kann dort nun anhand der vom MMS-Relay-Server MRSB ergänzten Identifikationsnummer in einer einheitlichen und für den Empfänger sehr komfortablen Art und Weise dargestellt werden. Durch Zählen der empfangenen, zusammengehörigen MMS-Empfänger-Benachrichtigungen und einem anschließenden Vergleich dieses Wertes mit der Maximalnummer kann die MMS-Benutzeranwendung (MMS User Agent) des Empfängergeräts (hier das Mobilfunkgerät MFG2) auf eine einfache Art und Weise festzustellen, ob bereits alle zusammengehörigen MMS-Empfänger-Benachrichtigungen "MM1_notification.REQ(s)" eingetroffen sind.

Im folgenden werden beispielhaft für eine Implementierung des MMS unter WAP die einzelnen MMS-Empfänger-Benachrichtigungen in textueller Codierung gemäß dem unter Punkt A. aufgeführten Beispiel 2 gezeigt, in dem die Bildgröße eines Multimedianachricht-Elementes (Nutzdatenobjekt) vom Typ "Standbild" bzw. "Bild" in zwei Stufen reduziert wird. (Es sei erwähnt, dass der oben erwähnten Abstraktnachricht (abstract message) "MM1_notification.REQ" gemäß 3GPP in WAP die "M-Notification.ind"-PDU (PDU: Protocol Data Unit = Protokolldateneinheit) entspricht. Gemäß einer Ausführungsform der Erfindung sind neue Kopffelder für die Identifikationsnummer und die Sequenznummer in den MMS-Empfänger-Benachrichtigungen eingerahmt. Genauer gesagt zeigt die Benachrichtigung 1 eine MMS-Empfänger-Benachrichtigung (WAP-PDU-"M-Notification.ind") für die Multimedianachricht-Variante 2A (großes Bild), zeigt die Benachrichtigung 2 eine MMS-Empfänger-Benachrichtigung (WAP-PDU-"M-Notification.ind") für die Multimedianachricht-Variante 2B (mittlere Bildgröße), und zeigt die Benachrichtigung 3 eine MMS-Empfänger-Benachrichtigung (WAP-PDU-"M-Notification.ind") für die Multimedianachricht-Variante 2C (kleines Bild).

### Benachrichtigung 1:

X-Mms-Message-Type: m-notification-ind
X-Mms-Transaction-ID: abc10
X-Mms-MMS-Version: 1.0
From: andreas.st.schmidt@siemens.com
Subject: A multimedia message
X-Mms-Message-Class: Personal
X-Mms-Message-Size: 58000
X-Mms-Expirv: 36000

| |
|---|
| X-Mms-Variant-Id: example-xyz |
| X-Mms-Max-Notifications: 3 |
| X-Mms-Sequence-Number: 1 |

X-Mms-Content-Location: http://operator.de/inbox/mm-id-2A

### Benachrichtigung 2:

X-Mms-Message-Type: m-notification-ind
X-Mms-Transaction-ID: abc12
X-Mms-MMS-Version: 1.0
From: andreas.st.schmidt@siemens.com
Subject: A multimedia message
X-Mms-Message-Class: Personal
X-Mms-Message-Size: 54500
X-Mms-Expiry: 36000

| |
|---|
| X-Mms-Variant-Id: example-xyz |
| X-Mms-Max-Notifications: 3 |
| X-Mms-Sequence-Number: 2 |

X-Mms-Content-Location: http://operator.de/inbox/mm-id-2B

### Benachrichtigung 3:

X-Mms-Message-Type: m-notification-ind
X-Mms-Transaction-ID: abc16
X-Mms-MMS-Version: 1.0
From: andreas.st.schmidt@siemens.com
Subject: A multimedia message
X-Mms-Message-Class: Personal
X-Mms-Message-Size: 51500
X-Mms-Expiry: 36000

| |
|---|
| X-Mms-Variant-Id: example-xyz |
| X-Mms-Max-Notifications: 3 |
| X-Mms-Sequence-Number: 3 |

X-Mms-Content-Location: http://operator.de/inbox/mm-id-2C

Es sei erwähnt, dass das beschriebene Prinzip nicht nur auf einfache bzw. vereinfachte MMS-Empfänger-Benachrichtigungen mit den Grundinformationen, sondern auch auf ausführliche MMS-Empfänger-Benachrichtigungen ("Detailed MMS Notifications") übertragen werden kann, die genauere Beschreibungen der einzelnen Multimedianachricht-Elemente beinhalten. Der Nutzen dieser Erfindung für derartige, ausführliche MMS-Empfänger-Benachrichtigungen kann dabei noch größer sein.

Es ist gemäß einer vorteilhaften Ausgestaltung ferner denkbar, dass die eindeutige Identifikationsnummer der Multimedianachricht, die Maximalnummer und die Sequenznummer in der URI codiert enthalten sind (vorzugsweise im letzten Teil der Pfadangabe).

### C. Komfortable Darstellung der Informationen aus den einzelnen MMS-Empfänger-Benachrichtungen bezüglich alternativer Herunterlad-Optionen durch eine besonders vorteilhafte Ausges taltung des HMI in der MMS-Benutzeranwendung (MMS User Agent) des Empfängergeräts

Wie bereits erwähnt, bietet das oben beschriebene Verfahren eine besonders vorteilhafte Ausgestaltung der Menüführung in der MMS-Benutzeranwendung des Empfängergeräts, da die MMS-Benutzeranwendung:
- anhand der eindeutigen Identifikationsnummer zusammengehörige MMS-Empfänger-Benachrichtigungen für unterschiedliche Varianten einer Multimedianachricht erkennt und
- anhand der Maximalnummer weiß, wie viele Multimedianachricht-Varianten der MMS-Relay-Server für eine bestimmte Multimedianachricht (gekennzeichnet durch dieselbe Identifikationsnummer) vorbereitet hat;
- anhand der Sequenznummer erkennt, welche MMS-Empfänger-Benachrichtigungen zu der ursprünglich vom MMS-Relay-Server empfangenen Multimedianachricht (ohne Adaption) gehört.

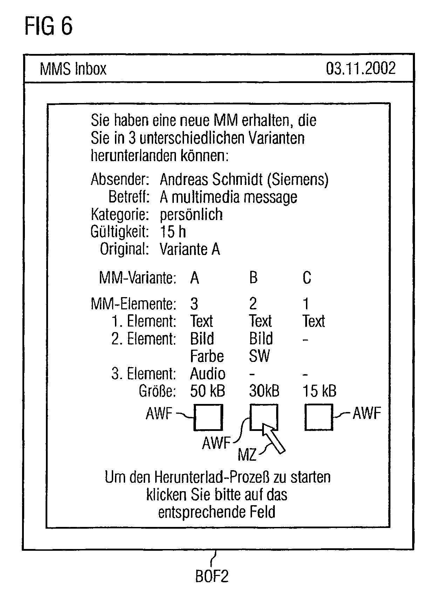

Figur 5 zeigt eine erste auf einem Display des Empfängergeräts dargestellte beispielhafte Benutzeroberfläche BOF1, auf der die jeweiligen MMS-Empfänger-Benachrichtigungen bzw. Empfängerbenachrichtigungsnachrichten aus dem oben unter Punkt A. beschriebenen Beispiel 2 verarbeitet und die in ihnen enthaltenen Informationen übersichtlicht dargestellt sind. Es wird nun angezeigt, dass im Eingangsordner (Inbox) vom "02.11.2002" des MMS eine Multimedianachricht mit drei alternativen Varianten bzw. Herunterlad-Optionen liegt. Ferner wird der Absender, der Betreff der Nachricht, die Kategorie, die Größe des variierten Multimedianachricht-Elements (hier des Bildes) sowie die Gültigkeit des der Multimedianachricht angezeigt. Schließlich wird eine Aufforderung an den Benutzer des Empfängergeräts gerichtet, sich für eine Variante des Multimedianachricht-Elements bzw. der Multimedianachricht zu entscheiden. Die Auswahl der gewünschten Herunterlad-Option kann durch Drücken einer entsprechenden Taste einer Tastatur des Empfängergeräts (im Beispiel von Figur 3 dem Mobilfunkgerät MFG2) geschehen.

Für den Fall der Verwendung ausführlicher MMS-Empfänger-Benachrichtigungen ("Detailed MMS-Notifications") werden dem Empfänger auf einer zweiten Benutzeroberfläche BOF2 des Empfängergeräts (beispielsweise dem Mobilfunkgerät MFG2 von Figur 3) vorteilhafterweise auch die anderen in einer MMS-Empfänger-Benachrichtigung möglicherweise enthaltenen Informationen angezeigt, wie es in Figur 6 zu sehen ist. Neben den auch bereits in Figur 5 angegebenen Informationen wird nun ferner angezeigt, dass im Eingangordner (Inbox) vom "03.11.2002" des MMS eine Multimedianachricht mit drei alternativen Varianten bzw. Herunterlad-Optionen liegt, wobei zusätzlich angegeben ist, welche Variante die Original-Variante ist, und welche Multimedianachricht-Elemente in den auf dem MMS-Relay-Server bereitgestellten Multimedianachrichtsvarianten vorgesehen sind. Die Auswahl einer oder der gewünschten Varianten bzw. Herunterlad-Option kann durch Drücken einer entsprechenden Taste einer Tastatur des Empfängergeräts geschehen oder durch Anwählen einer entsprechenden Anwahlfläche AWF mittels eines Mauszeigers MZ und entsprechender Bestätigung der Anwahl.

## Patentansprüche

1. Verfahren zum Übertragen von Nachrichten in einem Kommunikationsnetz mit folgenden Schritten:
Übertragen einer Übermittlungsnachricht (MM1_submit.REQ; MMA) mit einem oder mehreren Nutzdatenobjekten (MME) an eine Vermittlungskomponente (VK) zur Weiterleitung an eine erste Telekommunikationseinrichtung (MFG2); **gekennzeichnet durch** die weiteren Schritte:
Erstellen einer Mehrzahl von Varianten des einen oder der mehreren Nutzdatenobjekte (MME) in der Vermittlungskomponente in Abhängigkeit eines Satzes von Parametern;
Informieren der ersten Telekommunikationseinrichtung (MFG2) über die Bereitstellung einer Mehrzahl von Varianten des einen oder der mehreren Nutzdatenobjekte zum Übertragen an die erste Telekommunikationseinrichtung.

2. Verfahren nach Anspruch 1, mit folgenden Schritten:
Senden einer Zustellungsanforderungsnachricht (MM1_retrieve.REQ) bezüglich einer bestimmten Variante des einen oder der mehreren Nutzdatenobjekte von der ersten Telekommunikationseinrichtung (MFG2) zu der Vermittlungskomponente (VK);
Übermitteln einer Zustellungsnachricht (MM1_retrieve.RES) mit der angeforderten Variante des einen oder der mehreren Nutzdatenobjekte von der Vermittlungskomponente zu der ersten Telekommunikationseinrichtung.

3. Verfahren nach Anspruch 1 oder 2, bei dem das Informieren der ersten Telekommunikationseinrichtung mittels folgender Schritte erfolgt:
Erzeugen von jeweiligen Empfängerbenachrichtigungsnachrichten (MM1_notification.REQ(s)), die einer bestimmten Variante des einen oder der mehreren Nutzdatenobjekte zugeordnet sind, und
Übermitteln der jeweiligen Empfängerbenachrichtigungsnachrichten (MM1_notification.REQ(s)) von der Vermittlungskomponente (VK) zu der ersten Telekommunikationseinrichtung (MFG2).

4. Verfahren nach Anspruch 1 oder 2, bei dem der Satz von Parametern Parameter mit Informationen über die individuellen Eigenschaften der Telekommunikationseinrichtung, und insbesondere über auf der Telekommunikationseinrichtung vorgesehene Anwendungen, umfasst.

5. Verfahren nach einem der Ansprüche 1 bis 4, bei dem der Satz von Parametern Parameter mit Informationen über die individuellen Präferenzen des Empfängers umfasst.

6. Verfahren nach einem der Ansprüche 1 bis 5, bei dem der Satz von Parametern Parameter mit Beschreibungsinformationen umfasst, welche die Bedeutung von in der Übermittlungsnachricht enthaltenen Nutzdatenobjekten und/oder die Beziehung von enthaltenen Nutzdatenobjekten zueinander umfassen.

7. Verfahren nach einem der Ansprüche 1 bis 6, bei dem die Übermittlungsnachricht (MM1_submit.REQ; MMA) von einer zweiten Telekommunikationseinrichtung (MFG1) an die Vermittlungskomponente (VK) übermittelt wird.

8. Verfahren nach einem der Ansprüche 1 bis 7, bei dem die Nachrichten (MM1_submit.REQ; MM1 notification.REQ; MM1_retrieve.REQ; MM1_retrieve.RES) im Rahmen des Multimedia Messaging Service (MMS) zwischen der ersten Telekommunikationseinrichtung (MFG2) und der Vermittlungskomponente (VK) und/oder der zweiten Telekommunikationseinrichtung (MFG1) und der Vermittlungskomponente (VK) übertragen werden.

9. Verfahren nach einem der Ansprüche 1 bis 8, bei dem die Nachrichten zu und von der ersten Telekommunikationseinrichtung und/oder der zweiten Telekommunikationseinrichtung über eine Luftschnittstelle gesendet werden.

10. Verfahren nach Anspruch 9, bei dem die erste und/oder die zweite Telekommunikationseinrichtung ein Funkmodul umfasst, und insbesondere als ein Mobiltelefon, ein Schnurlostelefon, oder ein tragbarer Computer ausgebildet ist.

11. Verfahren nach Anspruch 9 oder 10, bei dem die Übertragung von Nachrichten zu und von der ersten und/oder der zweiten Telekommunikationseinrichtung mittels dem WAP-Protokoll WSP und/oder dem Hypertext Transfer Protocol (http) erfolgt.

12. Verfahren nach einem der Ansprüche 1 bis 11, bei dem die ersten Telekommunikationseinrichtung Teil eines ersten Telekommunikationsnetzes ist.

13. Verfahren nach Anspruch 12, bei dem das erste Telekommunikationsnetz als ein Mobilfunknetz ausgeführt ist, das insbesondere nach dem GSM-, GPRS-, EDGE-, UMTS- oder CDMA-Standard arbeitet.

14. Verfahren nach einem der Ansprüche 12 oder 13, bei dem die Vermittlungskomponente als ein Teil eines zweiten mit dem ersten Telekommunikationsnetz verbundenen Telekommunikationsnetzes ausgebildet ist, das insbesondere als ein auf Internet-Protokollen, wie dem Hypertext Transfer Protocol, basiertes Telekommunikationsnetz ausgeführt ist.

15. Verfahren nach Anspruch 14, bei dem das erste und das zweite Telekommunikationsnetz durch eine Verbindungskomponente miteinander verbunden sind, welche insbesondere als ein WAP-Gateway ausgeführt ist.

16. Verfahren nach einem der Ansprüche 1 bis 10, bei dem die Empfängerbenachrichtigungsnachricht mittels WAP-Push an die Telekommunikationseinrichtung übertragen wird.

17. Verfahren nach einem der Ansprüche 1 bis 16, bei dem die Vermittlungskomponente (VK) als ein MMS-Relay-Server (MRS1; MRS2) ausgebildet ist.

18. Verfahren nach einem der Ansprüche 2 bis 17, bei dem die Empfängerbenachrichtigungsnachrichten, die Varianten von Nutzdatenobjekten einer bestimmten Übermittlungsnachricht zugeordnet sind, eine bestimmte einheitliche Kennzeichnungsinformation aufweisen.

19. Verfahren nach einem der Ansprüche 2 bis 18, bei dem die Empfängerbenachrichtigungsnachrichten, die Varianten von Nutzdatenobjekten einer bestimmten Übermittlungsnachricht zugeordnet sind, eine Gesamtzahlinformation aufweisen, welche die Gesamtzahl der von Vermittlungskomponente erzeugten Empfängerbenachrichtigungsnachrichten für die Varianten des einen oder der mehreren Nutzdatenobjekte einer Übermittlungsnachricht angibt.

20. Verfahren nach Anspruch 2 bis 19, bei dem die jeweiligen unterschiedlichen Empfängerbenachrichtigungsnachrichten eine Reihenfolgeninformation aufweisen, welche die Reihenfolge der von der Vermittlungskomponente erzeugten Varianten des einen oder mehreren Nutzdatenobjekte enthält.

21. Verfahren nach einem der Ansprüche 2 bis 20, bei dem die jeweiligen unterschiedlichen Empfängerbenachrichtigungsnachrichten eine Unterscheidungsinformation aufweisen, welche angibt, ob es sich bei einer einer jeweiligen Empfängerbenachrichtigungsnachricht zugeordneten Variante eines Nutzdatenobjekts um die ursprüngliche in der Übermittlungsnachricht enthaltene Variante oder um eine abgeänderte Variante handelt.

22. Verfahren nach einem der Ansprüche 2 bis 21, bei dem aus der Reihenfolgeninformation in den jeweiligen unterschiedlichen Empfängerbenachrichtigungsnachrichten hervorgeht, welche der Empfängerbenachrichtigungsnachrichten mit der unveränderten Originalversion des mindestens einen Nutzdatenobjektes bzw. der Übermittlungsnachricht in Beziehung steht.

23. Verfahren nach einem der Ansprüche 18 bis 22, bei dem die Kennzeichnungsinformation und/oder die Gesamtzahlinformation und/oder die Reihenfolgeninformation unter einem jeweils eigenständigen Kopffeld in einer Empfängerbenachrichtigungsnachricht vorgesehen sind.

24. Verfahren nach einem der Ansprüche 18 bis 22, bei dem die Kennzeichnungsinformation und/oder die Gesamtzahlinformation und/oder die Reihenfolgeninformation zusammen kodiert in einer Empfängerbenachrichtigungsnachricht vorgesehen sind.

25. Verfahren nach einem der Ansprüche 18 bis 24, bei dem die Kennzeichnungsinformation und/oder die Gesamtzahlinformation und/oder die Reihenfolgeninformation nach Erhalt einer jeweiligen Empfängerbenachrichtigungsnachricht von der ersten Telekommunikationseinrichtung verarbeitet werden.

26. Verfahren nach Anspruch 25, bei dem auf einer Benutzeroberfläche die verschiedenen möglichen Varianten zur Übertragung von der Vermittlungskomponente dargestellt werden, damit ein Benutzer eine oder mehrere Variante auswählen und zur Übermittlung von der Vermittlungskomponente anfordern kann.

27. Verfahren nach einem der Ansprüche 1 bis 26, bei dem die Nutzdatenobjekte (MME) Textinformationen, Audioinformationen, Videoinformationen, ausführbare Programme, Softwaremodule oder eine Kombination dieser Informationen enthalten.

28. Telekommunikationsanordnung umfassend eine Vermittlungskomponente (VK) sowie zumindest eine erste Telekommunikati onseinrichtung, wobei die Telekommunikationsanordnung dafür ausgelegt ist, jeweils alle Verfahrensschritte nach einem der Ansprüche 1 bis 27 durchzuführen.

## Claims

1. Method for transmitting messages in a communication network with the following steps:
Transmission of a transmission message (MM1_submit.REQ; MMA) with one or more useful data objects (MME) to a switching component (VK) for forwarding to a first telecommunication device (MFG2);
**characterised by** the further steps
Creation of a plurality of variants of the one or more useful data objects (MME) in the switching component as a function of a set of parameters;
Informing the first telecommunication device (MFG2) of the availability of a plurality of variants of the one or more useful data objects for transmission to the first telecommunication device.

2. Method according to claim 1, with the following steps:
Transmission of a delivery request message (MM1_retrieve.REQ) relating to a specific variant of the one or more useful data objects from the first telecommunication device (MFG2) to the switching component (VK);
Transmission of a delivery message (MM1_retrieve.RES) with the requested variant of the one or more useful data objects from the switching component (VK) to the first telecommunication device.

3. Method according to claim 1 or 2, in which the first telecommunication device is informed by means of the following steps:
Generation of respective recipient notification messages (MM1_notification.REQ(s)) assigned to a specific variant of the one or more useful data objects and
Transmission of the respective recipient notification messages (MM1_notification.REQ(s)) from the switching component (VK) to the first telecommunication device (MFG2).

4. Method according to claim 1 or 2, in which the set of parameters includes parameters with information about the individual characteristics of the telecommunication device and in particular about applications provided on the telecommunication device.

5. Method according to one of claims 1 to 4, in which the set of parameters includes parameters with information about the individual preferences of the recipient.

6. Method according to one of claims 1 to 5, in which the set of parameters includes parameters with descriptive information, which includes the significance of useful data objects contained in the transmission message and/or the relationships between contained useful data objects.

7. Method according to one of claims 1 to 6, in which the transmission message (MM1_submit.REQ; MMA) is transmitted from a second telecommunication device (MFG1) to the switching component (VK).

8. Method according to one of claims 1 to 7, in which the messages (MM1_submit.REQ; MM1_notification.REQ; MM1_retrieve.REQ; MM1_retrieve.RES) are transmitted in the context of the multimedia messaging service (MMS) between the first telecommunication device (MFG2) and the switching component (VK) and/or the second telecommunication device (MFG1) and the switching component (VK).

9. Method according to one of claims 1 to 8, in which the messages to and from the first telecommunication device and/or the second telecommunication device are sent via an air interface.

10. Method according to claim 9, in which the first and/or second telecommunication device comprises a radio module and is configured in particular as a mobile telephone, a cordless telephone or a portable computer.

11. Method according to claim 9 or 10, in which messages to and from the first and/or second telecommunication device are transmitted by means of the WAP protocol WSP and/or the hypertext transfer protocol (http).

12. Method according to one of claims 1 to 11, in which the first telecommunication device is part of a first telecommunication network.

13. Method according to claim 12, in which the first telecommunication network is configured as a mobile radio network, operating in particular according to the GSM, GPRS, EDGE, UMTS or CDMA standard.

14. Method according to one of claims 12 or 13, in which the switching component is configured as part of a second telecommunication network connected to the first telecommunication network, which is configured in particular as a telecommunication network based on internet protocols, such as the hypertext transfer protocol.

15. Method according to claim 14, in which the first and second telecommunication networks are connected together by means of a connecting component, which is configured in particular as a WAP gateway.

16. Method according to one of claims 1 to 10, in which the recipient notification message is transmitted to the telecommunication device by WAP push.

17. Method according to one of claims 1 to 16, in which the switching component (VK) is configured as an MMS relay server (MRS1; MRS2).

18. Method according to one of claims 2 to 17, in which the recipient notification messages, which are assigned to variants of useful data objects of a specific transmission message, have specific standard identification information.

19. Method according to one of claims 2 to 18, in which the recipient notification messages, which are assigned to variants of useful data objects of a specific transmission message, have total information, indicating the total number of recipient notification messages generated by the switching component for the variants of the one or more useful data objects of a transmission message.

20. Method according to claim 2 to 19, in which the respective different recipient notification messages have sequence information, which contains the sequence of the variants of the one or more useful data objects generated by the switching component.

21. Method according to one of claims 2 to 20, in which the respective different recipient notification messages have differentiation information, which indicates whether a variant of a useful data object assigned to a respective recipient notification message is the original variant contained in the transmission message or a modified variant.

22. Method according to one of claims 2 to 21, in which it is clear from the sequence information in the respective different recipient notification messages which of the recipient notification messages relates to the unmodified original version of the at least one useful data object or the transmission message.

23. Method according to one of claims 18 to 22, in which the identification information and/or the total information and/or the sequence information is provided under a respectively independent header field in a recipient notification message.

24. Method according to one of claims 18 to 22, in which the identification information and/or the total information and/or the sequence information together is coded in a recipient notification message.

25. Method according to one of claims 18 to 24 in which the identification information and/or the total information and/or the sequence information is processed by the first telecommunication device on receipt of a respective recipient notification message.

26. Method according to claim 25, in which the different possible variants for transmission by the switching component are displayed on a user interface so that a user can select one or more variants and request transmission by the switching component.

27. Method according to one of claims 1 to 26, in which the useful data objects (MME) contain text information, audio information, video information, executable programs, software modules or a combination of such information.

28. Telecommunication arrangement comprising a switching component (VK) and at least a first telecommunication device, the telecommunication arrangement being designed to implement all method respective method steps according to one of claims 1 to 27.

## Revendications

1. Procédé pour transmettre des messages dans un réseau de communication, comprenant les étapes suivantes:
- transmettre un message de transmission (MM1_submit.REQ; MMA) avec un ou plusieurs objets de données utiles (MME) à une composante de commutation (VK) pour réacheminement vers un premier équipement de télécommunications (MFG2), **caractérisé par** les autres étapes suivantes:
- créer une pluralité de variantes de l'un ou des plusieurs objets de données utiles (MME) dans la composante de commutation en fonction d'un jeu de paramètres;
- informer le premier équipement de télécommunications (MFG2) de la mise à disposition d'une pluralité de variantes de l'un ou des plusieurs objets de données utiles pour transmission au premier équipement de télécommunications.

2. Procédé selon la revendication 1, comprenant les étapes suivantes:
- émettre un message de requête de notification (MM1_retrieve.REQ) concernant une variante déterminée de l'un ou des plusieurs objets de données utiles, du premier équipement de télécommunications (MFG2) vers la composante de commutation (VK);
- transmettre un message de notification (MM1_retrieve.RES) avec la variante demandée de l'un ou des plusieurs objets de données utiles, de la composante de commutation vers le premier équipement de télécommunications.

3. Procédé selon la revendication 1 ou 2, dans lequel informer le premier équipement de télécommunications se fait au moyen des étapes suivantes:
- générer des messages respectifs d'information de destinataire (MMI_notification.REQ(s)) qui sont affectés à une variante déterminée de l'un ou des plusieurs objets de données utiles et
- transmettre les messages respectifs d'information de destinataire (MMI_notification.REQ(s)) de la composante de commutation (VK) au premier équipement de télécommunications (MFG2).

4. Procédé selon la revendication 1 ou 2, dans lequel le jeu de paramètres comprend des paramètres avec des informations sur les caractéristiques individuelles de l'équipement de télécommunications et en particulier concernant des applications prévues sur l'équipement de télécommunications.

5. Procédé selon l'une des revendications 1 à 4, dans lequel le jeu de paramètres comprend des paramètres avec des informations sur les préférences individuelles du destinataire.

6. Procédé selon l'une des revendications 1 à 5, dans lequel le jeu de paramètres comprend des paramètres avec des informations de description qui incluent la signification d'objets de données contenus dans le message de transmission et/ou la relation d'objets de données utiles contenus les uns envers les autres.

7. Procédé selon l'une des revendications 1 à 6, dans lequel le message de transmission (MM1_submit.REQ; MMA) est transmis d'un deuxième équipement de télécommunications (MFG1) à la composante de commutation (VK).

8. Procédé selon l'une des revendications 1 à 7, dans lequel les messages (MM1_submit.REQ; MM1_notification.REQ; MM1_retrieve.REQ; MM1_retrieve.RES) sont transmis dans le cadre du Multimedia Messaging Service (MMS) entre le premier équipement de télécommunications (MFG2) et la composante de commutation (VK) et/ou le deuxième équipement de télécommunications (MFG1) et la composante de commutation (VK).

9. Procédé selon l'une des revendications 1 à 8, dans lequel les messages vers et venant du premier dispositif de télécommunications et/ou du deuxième dispositif de télécommunications sont émis via une interface aérienne.

10. Procédé selon la revendication 9, dans lequel le premier et/ou le deuxième équipement de télécommunications comprennent un module radio et se présentent en particulier sous la forme d'un téléphone mobile, d'un téléphone sans fil ou d'un ordinateur portable.

11. Procédé selon la revendication 9 ou 10, dans lequel la transmission de messages vers et du premier et/ou du deuxième équipement de télécommunications se fait au moyen d'un protocole WAP WSP et/ou du Hypertext Transfer Protocol (http).

12. Procédé selon l'une des revendications 1 à 11, dans lequel le premier équipement de télécommunications fait partie d'un premier réseau de télécommunications.

13. Procédé selon la revendication 12, dans lequel le premier réseau de télécommunications est réalisé en tant que réseau radio mobile qui opère en particulier selon le standard GSM, GPRS, EDGE, UMTS ou CDMA.

14. Procédé selon l'une des revendications 12 ou 13, dans lequel la composante de commutation se présente en tant qu'une partie d'un deuxième réseau de télécommunications qui est relié au premier réseau de télécommunications et est réalisé en particulier en tant que réseau de télécommunications basé sur des protocoles Internet tels que le Hypertext Transfer Protocol.

15. Procédé selon la revendication 14, dans lequel les premier et deuxième réseaux de télécommunications sont reliés entre eux par une composante de liaison qui est réalisée en particulier en tant que passerelle WAP.

16. Procédé selon l'une des revendications 1 à 10, dans lequel le message d'information de destinataire est transmis par WAP-push à l'équipement de télécommunications.

17. Procédé selon l'une des revendications 1 à 16, dans lequel la composante de commutation (VK) se présente sous la forme d'un MMS-Relay Server (MRS1; MRS2).

18. Procédé selon l'une des revendications 2 à 17, dans lequel les messages d'information de destinataire qui sont affectés à des variantes d'objets de données utiles d'un message de transmission déterminé comportent une information d'identification uniforme déterminée.

19. Procédé selon l'une des revendications 2 à 18, dans lequel les messages d'information de destinataire qui sont affectés à des variantes d'objets de données utiles d'un message de transmission déterminé comportent une information de nombre total qui indique le nombre total des messages d'information de destinataire générés par une composante de commutation pour les variantes de l'un ou des plusieurs objets de données utiles d'un message de transmission.

20. Procédé selon l'une des revendication 2 à 19, dans lequel les différents messages respectifs d'information de destinataire comportent une information d'ordre qui contient l'ordre des variantes de l'un ou des plusieurs objets de données utiles générées par la composante de commutation.

21. Procédé selon l'une des revendications 2 à 20, dans lequel les différents messages respectifs d'information de destinataire comportent une information de distinction qui indique si une variante d'un objet de données utiles affectée à un message respectif d'information de destinataire est la variante d'origine contenue dans le message de transmission ou une variante modifiée.

22. Procédé selon l'une des revendications 2 à 21, dans lequel il ressort de l'information d'ordre dans les différents messages respectifs d'information de destinataire lequel des messages d'information de destinataire est en relation avec la version originale non modifiée de l'au moins un objet de donnés utiles resp. du message de transmission.

23. Procédé selon l'une des revendications 18 à 22, dans lequel l'information d'identification et/ou l'information de nombre total et/ou l'information d'ordre sont prévues sous un champ d'en-tête respectivement autonome dans un message d'information de destinataire.

24. Procédé selon l'une des revendications 18 à 22, dans lequel l'information d'identification et/ou l'information de nombre total et/ou l'information d'ordre sont prévues codées ensemble dans un message d'information de destinataire.

25. Procédé selon l'une des revendications 18 à 24, dans lequel l'information d'identification et/ou l'information de nombre total et/ou l'information d'ordre sont traitées par le premier équipement de télécommunications après réception d'un message respectif d'information de destinataire.

26. Procédé selon la revendication 25, dans lequel sont représentées, sur une surface utilisateur, les différentes variantes possibles pour la transmission par la composante de commutation, pour permettre à un utilisateur de sélectionner une ou plusieurs variantes et de les demander pour la transmission par la composante de commutation

27. Procédé selon l'une des revendications 1 à 26, dans lequel les objets de données utiles (MME) contiennent des informations textuelles, des informations audio, des informations vidéo, des programmes exécutables, des modules logiciels ou une combinaison de ces informations.

28. Dispositif de télécommunications comprenant une composante de commutation (VK) ainsi qu'au moins un premier équipement de télécommunications, le dispositif de télécommunications étant conçu pour exécuter respectivement toutes les étapes du procédé selon l'une des revendications 1 à 27.
